(19) Europäisches Patentamt
European Patent Office
Office européen des brevets

(11) **EP 4 201 705 A1**

(12) **EUROPEAN PATENT APPLICATION**
published in accordance with Art. 153(4) EPC

(43) Date of publication:
**28.06.2023 Bulletin 2023/26**

(21) Application number: **21877236.6**

(22) Date of filing: **11.08.2021**

(51) International Patent Classification (IPC):
***B60C 11/00*** *(2006.01)* ***B60C 1/00*** *(2006.01)*
***B60C 3/04*** *(2006.01)* ***B60C 11/03*** *(2006.01)*
***C08K 3/013*** *(2018.01)* ***C08K 5/548*** *(2006.01)*
***C08L 21/00*** *(2006.01)*

(52) Cooperative Patent Classification (CPC):
**B60C 1/00; B60C 3/04; B60C 11/00; B60C 11/03; C08K 3/013; C08K 5/548; C08L 21/00;** Y02T 10/86

(86) International application number:
**PCT/JP2021/029615**

(87) International publication number:
**WO 2022/074932 (14.04.2022 Gazette 2022/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.10.2020 JP 2020169923**

(71) Applicant: **Sumitomo Rubber Industries, Ltd.**
**Kobe-shi, Hyogo 651-0072 (JP)**

(72) Inventor: **TANAKA, Tatsuhiro**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **TIRE**

(57) A tire comprising a tread, the tread comprising at least one rubber layer of a rubber composition comprising a rubber component, a filler, and a silane coupling agent, wherein a ratio ($G/W_L$) of a tire weight G (kg) with respect to a maximum load capability $W_L$ (kg) of the tire is 0.0150 or less, and, where Wt (mm) is the tire cross-sectional width and Dt (mm) is the tire outer diameter, Wt and Dt satisfy the following Mathematical expression (1), and an average value of tan δ at 15°C to 30°C of the rubber composition, which average value is measured under conditions of a frequency of 10 Hz, an initial strain of 10%, and an amplitude of ±0.5%, is 0.20 or less:

$$(\pi/4)\times(Dt^2/Wt)\geq 1700 \cdots (1)$$

FIG. 2

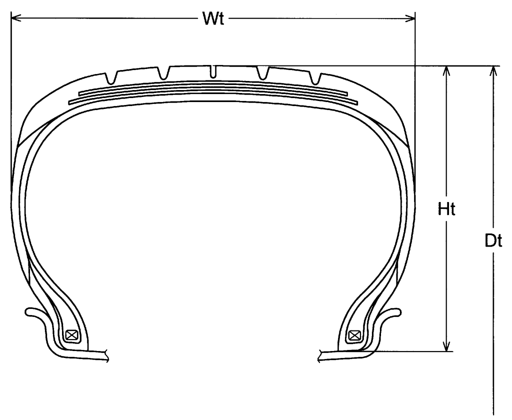


EP 4 201 705 A1

**Description**

TECHNICAL FIELD

The disclosure relates to a tire.

BACKGROUND ART

When a tire runs over a projection on a road surface or when this tire falls into a pot hole, a side part (a bead and the like) of the tire can deform significantly. A carcass ply is normally located around the bead, and deforming of a portion of the bead causes tensile stress to be loaded onto the carcass ply, possibly resulting in an occurrence of cutting of a cord comprised in the carcass ply. A damage accompanying this cord cutting is called a pinch cut.
Patent document 1 discloses a tire aimed at improving pinch cut resistance.

PRIOR ART DOCUMENT

Patent Document

Patent Document 1: JP 2019-202578 A

SUMMARY OF THE INVENTION

PROBLEM TO BE SOLVED BY THE INVENTION

Patent document 1 discloses an example in which the greater the tire weight, the greater the load resistance and pinch cut resistance. However, it is considered that it will be required to increase the pinch cut resistance while decreasing the tire weight in the future.
An object of the disclosure is to provide a tire in which fuel efficiency and pinch cut resistance are improved in a well-balanced manner.

MEANS TO SOLVE THE PROBLEM

As a result of intensive studies, it was found that a tire having an improvement in fuel efficiency and pinch cut resistance in a well-balanced manner could be obtained by making a tire weight with respect to the maximum load capability of the tire, the tire size, and tan δ of a rubber composition constituting a tread to be within a predetermined range.
In other words, the disclosure relates to a tire comprising a tread, the tread comprising at least one rubber layer of a rubber composition comprising a rubber component, a filler, and a silane coupling agent, wherein a ratio ($G/W_L$) of a tire weight G (kg) with respect to a maximum load capability $W_L$ (kg) of the tire is 0.0150 or less, and, where Wt (mm) is the tire cross-sectional width and Dt (mm) is the tire outer diameter, Wt and Dt satisfy the following Mathematical expression (1), and an average value of tan δ at 15°C to 30°C of the rubber composition, which average value is measured under a condition of a frequency of 10 Hz, an initial strain of 10%, and an amplitude of ±0.5% is 0.20 or less:

$$(\pi/4)\times(Dt^2/Wt)\geq 1700 \cdots (1)$$

EFFECTS OF THE INVENTION

In a tire of the disclosure, which tire has made a tire weight with respect to the maximum load capability of the tire, the tire size, and tan δ of a rubber composition constituting a tread to be within a predetermined range, fuel efficiency and pinch cut resistance are improved in a well-balanced manner.

BRIEF DESCRIPTION OF THE DRAWINGS

FIG. 1 is a schematic view of a ground contact surface of a tire when a tread is pressed against a flat surface.
FIG. 2 is a view showing a tire cross-sectional width Wt, a tire cross-sectional height Ht, and a tire outer diameter Dt of a cross section of the tire.

EMBODIMENT FOR CARRYING OUT THE INVENTION

A tire being one embodiment of the disclosure is a tire comprising a tread, the tread comprising at least one rubber layer of a rubber composition comprising a rubber component, a filler, and a silane coupling agent, wherein a ratio ($G/W_L$) of a tire weight G (kg) with respect to a maximum load capability $W_L$ (kg) of the tire is 0.0150 or less (preferably 0.0145 or less, more preferably 0.0140 or less, further preferably 0.0135 or less, and particularly preferably 0.0130 or less), and, where Wt (mm) is the tire cross-sectional width and Dt (mm) is the tire outer diameter, Wt and Dt satisfy the following Mathematical expression (1), and an average value of tan δ at 15°C to 30°C of the rubber composition, which average value is measured under condition of a frequency of 10 Hz, an initial strain of 10%, and an amplitude of ±0.5%, is 0.20 or less (preferably 0.19 or less and more preferably 0.18 or less):

$$(\pi/4)\times(Dt^2/Wt)\geq 1700 \cdots (1)$$

The tire weight with respect to the maximum load capability of the tire, the tire size, and the tan δ of the rubber composition constituting the tread satisfying the above-described requirements makes it possible for the obtained tire to have an improvement in fuel efficiency and pinch cut resistance in a well-balanced manner. Although it is not intended to be bound by theory with respect to the reason therefor, it can be considered as follows.

It is difficult for the tire having a light weight with respect to the maximum load capability to alleviate input from a road surface, making it easy to cause deformation of a side part of the tire, so that there is a concern for causing damage in the side part and deterioration in fuel efficiency when the tire runs over a projection such as an edge stone. Thus, setting the value of the above-described Mathematical expression (1) to be 1,700 or more in such a tire having the light weight with respect to the maximum load capability and decreasing the width of a tread part with respect to the lateral direction area of the tire makes it possible to decrease heat dissipation originating from the tread part. It is considered that this makes it possible to suppress a temperature increase in the tire due to heat dissipation of the tread part contributing most to the heat dissipation, prevent the temperature of the tire or the temperature of the side part from increasing, and prevent deterioration of fuel efficiency while preventing pinch cut resistance from decreasing.

Moreover, it is considered that, during the rolling motion of the above-described light-weight tire, the oscillation frequency is higher in frequency than conventionally and deformation is minute, so it is considered that setting the average value of loss tangent tan δ from a temperature being lower than the normal temperature to around the normal temperature (in the disclosure, the average value of loss tangent tan δ at 15°C to 30°C) to be less than a predetermined value makes it possible to further decrease heat dissipation originating from the tread part and further improve pinch cut resistance and fuel efficiency.

In the disclosure, the tire cross-sectional width Wt (mm), the tire cross-sectional height Ht (mm), and the tire outer diameter Dt (mm) are measured in a state in which a tire is mounted to a normal rim and filled with air so that the tire has an internal pressure of 250 kPa or more, and, even more, in a non-load state. Besides, the "tire cross-sectional width" is a maximum width between sidewall outer surfaces in the above-described state, with any patterns or letters on a tire side surface being excluded. Besides, in a case of a tire not specified in the standard, the above-described normal rim is to refer to a rim that can be rim-assembled to the tire and hold the internal pressure, or, in other words, what has the least rim diameter and then the least rim width of rims causing no air leakage between the rim and the tire.

With respect to the tire of the disclosure, where Wt (mm) is the tire cross-sectional width and Dt (mm) is the tire outer diameter, Wt and Dt satisfy the following Mathematical expression (1):

$$(\pi/4)\times(Dt^2/Wt)\geq 1700 \cdots (1)$$

Here, there is a relationship that as Dt increases the value of Mathematical expression (1) increases and, contrarily, as it decreases the same value decreases, but as Wt increases the value of Mathematical expression (1) decreases and, contrarily, as it decreases the same value increases, so that, with a focus on the above-described relationship, adjusting Dt and Wt makes it possible to carry out an adjustment such that Dt ad Wt satisfy the Mathematical expression (1).

The value of Mathematical expression (1) is preferably 1,750 or more, more preferably 1,800 or more, further preferably 1,900 or more, further preferably 1,950 or more, and particularly preferably 2,000 or more. Moreover, the value of Mathematical expression (1) is preferably 2,800 or less, more preferably 2,700 or less, and further preferably 2,600 or less.

Examples of the tire size satisfying Mathematical expression (1) are specifically 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, 195/55R20, and the like.

In the specification, the maximum load capability $W_L$ (kg) is a value calculated using the below-described Mathematical expressions (2) and (3), where Wt (mm) is a tire cross-sectional width, Ht (mm) is a tire cross-sectional height, and Dt (mm) is a tire outer diameter, which value is to be a value being approximately 50 kg to 100 kg less than the maximum load capability based on a load index (LI) specified in the JATMA standard. Besides, the tire cross-sectional height Ht is the distance from a bead part bottom surface to a tread uppermost surface and is 1/2 the difference between the outer diameter and the port rim diameter of the tire:

$$V=\{(Dt/2)^2-(Dt/2-Ht)^2\}\times\pi\times Wt \cdots (2)$$

$$W_L=0.000011\times V+100 \cdots (3)$$

In the specification, "the tire weight" is expressed in G (kg). Note that G is the weight of a stand-alone tire unit not including the weight of the rim. Moreover, in a case that a noise damping material, a sealant, a sensor, and the like are mounted to a tire inner cavity part, G is a value including the weights thereof. Besides, the tire weight G can be changed by a normal method, or, in other words, it can be increased by increasing the specific gravity of the material constituting the tire, increasing the amount of a material having the specific gravity being large, or increasing the thickness of each member of the tire, or can be decreased by the converse thereof.

With respect to the tire according to the disclosure, the ratio ($G/W_L$) of the tire weight G (kg) with respect to the maximum load capability $W_L$ (kg) is 0.0150 or less, preferably 0.0145 or less, more preferably 0.0140 or less, further preferably 0.0135 or less, and particularly preferably 0.0130 or less. On the other hand, a lower limit of $G/W_L$ is not particularly limited and can be 0.0080 or more, 0.0090 or more, or 0.0100 or more, for example.

From the viewpoint of better exhibiting the effect of the disclosure, the maximum load capability $W_L$ (kg) is preferably 300 or more, more preferably 350 or more, and further preferably 400 or more. Moreover, from the viewpoint of better exhibiting the effect of the disclosure, the maximum load capability $W_L$ (kg) can be, for example, 1,300 or less, 1,200 or less, 1,100 or less, 1,000 or less, 900 or less, 800 or less, 700 or less, or 650 or less. Besides, the maximum load capability $W_L$ can be increased by increasing the virtual volume V of the space occupied by the tire, or can be decreased by the converse thereof.

A ratio (30°C tan δ/G) of tan δ at 30°C of the rubber composition with respect to the tire weight G (kg), which tan δ at 30°C is measured under a condition of a frequency of 10 Hz, an initial strain of 5%, and a dynamic strain of ±1.0%, is preferably over 0.010, more preferably over 0.015, further preferably over 0.020, further preferably over 0.022, further preferably over 0.024, and particularly preferably over 0.026. As the tire weight decreases, it is more difficult for shock due to road surface roughness to be alleviated, and there is a tendency for deformation to be greater when shock is applied than during the rolling motion. Making the ratio (30°C tan δ/G) of tan δ at 30°C of the rubber composition with respect to the tire weight G (kg) to be within the above-described range makes it possible to increase tan δ at 30°C of the rubber composition in accordance with the tire weight. It is considered that this makes it easy to absorb energy by the rubber layer of the disclosure and alleviating tensile stress loaded onto the carcass ply makes it possible to improve pinch cut resistance. On the other hand, an upper limit of 30°C tan δ/G is not particularly limited and 30°C tan δ/G can be 0.070 or less, 0.060 or less, 0.050 or less, 0.045 or less, 0.040 or less, 0.037 or less, or 0.034 or less, for example.

tan δ at 30°C of the rubber composition, which tan δ at 30°C is measured under a condition of a frequency of 10 Hz, an initial strain of 5%, and a dynamic strain of ±1.0%, is preferably 0.28 or less.

From the viewpoints of fuel efficiency and steering stability, the specific gravity of the rubber composition is preferably 1.270 or less, more preferably 1.250 or less, further preferably 1.220 or less, and particularly preferably 1.200 or less.

A total styrene content in styrene-butadiene rubber and butadiene rubber comprised in the rubber component is preferably 60% by mass or less.

The rubber component preferably comprises modified solution-polymerized styrene-butadiene rubber.

Preferably, the silane coupling agent comprises a polysulfide compound, which polysulfide compound comprises an alkoxysilyl group and a sulfur atom, and, in which polysulfide compound, the number of carbon atoms intervening between a silicon atom constituting the alkoxysilyl group and the sulfur atom is six or more.

Preferably, the tread part has a pair of shoulder land parts partitioned by two or more circumferential grooves extending continuously in the tire circumferential direction and a center land part located between the pair of shoulder land parts, and has at least one small hole in at least one land part, which small hole has an area of opening to a tread surface of 0.1 to 15 $mm^2$. Besides, in the disclosure, the "small hole" refers to what extends from within the tread and is opened to the tread surface.

Where Sr is a total land part area and $S_{ce}$ is a total center land part area, $S_{ce}/Sr$ is preferably 0.35 to 0.80.

The tread part has at least two circumferential grooves extending continuously in the tire circumferential direction,

and a width direction groove, and can optionally have a sipe, and, where La is a length of the tire in the circumferential direction and Lb is a total sum of a total Lb1 of width direction edge component lengths of width direction grooves and a total Lb2 of width direction edge component lengths of sipes, La/Lb is preferably 0.10 to 0.30.

Where St is a ground contact area of the tread part and Sg is a total sum of a total area Sg1 of the circumferential grooves and a total area Sg2 of the width direction grooves and the sipes of tread part, Sg/St is preferably 0.15 to 0.35. Sg1/St is preferably 0.09 to 0.16 and Sg2/St is preferably 0.08 to 0.14.

A procedure of producing the tire comprising the tread being one embodiment of the disclosure will be described in detail below. Note the following description is illustrative for explaining the disclosure and is not intended to limit the technical scope of the disclosure only to this description range. Besides, in the specification, a numerical range shown using the recitation "to" is to include the numerical values at both ends thereof.

FIG. 1 shows a schematic view of a ground contact surface when the tread is pressed against a flat surface. As shown in FIG. 1, a tread 10 constituting the tire according to the disclosure has a circumferential groove 1 extending continuously in a tire circumferential direction C (extending linearly along the tire circumferential direction in the example in FIG. 1), and a lateral groove 21 and sipes 22, 23 extending in the width direction.

The tread 10 has the circumferential groove 1 in a plurality, which circumferential groove 1 extends continuously in the circumferential direction C. While three of the circumferential grooves 1 are provided in FIG. 1, the number of circumferential grooves is not particularly limited, so that it may be two to five, for example. Moreover, in the disclosure, the circumferential groove 1 extends linearly along the circumferential direction, but is not limited to such an aspect, and, for example, may extend in a wavy, sinusoidal, or zigzag shape along the circumferential direction.

The tread 10 has a land part 2 being partitioned by the plurality of circumferential grooves 1 in a tire width direction W. A shoulder land part 11 is a pair of land parts formed between the circumferential groove 1 and a tread end Te. A center land part 12 is a land part formed between the pair of shoulder land parts 11. While two center land parts 12 are provided in FIG. 1, the number of center land parts is not particularly limited, and can be one to five, for example.

The land part 2 is preferably provided with a lateral groove (width direction groove) and/or sipe. In FIG. 1, the shoulder land part 11 is provided with the lateral shoulder groove 21 in a plurality, a terminal of which lateral shoulder groove 21 is opened to the circumferential groove 1, and the shoulder sipe 22 in a plurality, one end of which shoulder sipe 22 is opened to the circumferential groove 1, and the center land part 12 is provided with the center sipe 23 in a plurality, one end of which center sipe 23 is opened to the circumferential groove 1. In the disclosure, it preferably does not have a lateral groove (width direction groove) or sipe such as to traverse the center land part 12, both ends of which lateral groove (width direction groove) or sipe are being opened to the circumferential groove.

The land part 2 preferably has at least one small hole. In FIG. 1, in the center land part 12, two of small holes 24 are arranged in a land portion surrounded by a tire width direction portion and a tire circumferential portion of the one center sipe 23, and the center sipe 23 being arranged adjacent to the one center sipe 23 in the tire circumferential direction. An area S of opening to the tread surface of the small hole is preferably 0.1 to 15 $mm^2$, more preferably 0.5 to 10 $mm^2$, further preferably 1.0 to 7.0 $mm^2$, and particularly preferably 1.5 to 5.0 $mm^2$. It is considered that providing a small hole having the above-mentioned area of opening makes it possible to increase the surface area of the tread part without adversely affecting the other performances, making it possible to improve heat dissipation property in the tread part and suppress a temperature increase in the tire and the side part.

In the center land part 12, a total number N(N/La) of the small holes 24 with respect to a length La (mm) of the tire in the circumferential direction C is preferably 0.05 to 2.0, preferably 0.1 to 1.0, and further preferably 0.2 to 0.8.

The depth of the deepest part of the circumferential groove 1 is preferably 3.0 to 10.0 mm, preferably 4.0 to 9.0 mm, and further preferably 5.0 to 8.0 mm. Moreover, the depth of the deepest part of the small hole 24 is preferably 30 to 90% and more preferably 40 to 80% of the depth of the deepest part of the circumferential groove 1.

Besides, in the specification, a "groove" including the circumferential groove and the width direction groove refers to a recess having a width greater than at least 2.0 mm. On the other hand, in the specification, a "sipe" refers to a narrow notch having a width of 2.0 mm or less and preferably 0.5 to 1.5 mm.

Moreover, with respect to the tire of the disclosure, where Sr is a total land part area and $S_{ce}$ is a total center land part area, $S_{ce}$/Sr is preferably 0.35 or more, more preferably 0.40 or more, further preferably 0.42 or more, and particularly preferably 0.44 or more. Furthermore, $S_{ce}$/Sr is preferably 0.80 or less, more preferably 0.70 or less, further preferably 0.60 or less, and particularly preferably 0.55 or less. It is considered that setting $S_{ce}$/Sr to be within the above-mentioned range makes it possible to optimize the rigidity in the center region of the tread part, making it possible to absorb shock even in the tread part when shock is transmitted and suppress an excessive deformation in the side part.

With respect to the tire of the disclosure, where St is a ground contact area of the tread part and Sg is a total sum of a total area Sg1 of the circumferential grooves and a total area Sg2 of the width direction grooves and the sipes of the tread part, Sg/St is preferably 0.15 or more, more preferably 0.18 or more, and further preferably 0.21 or more. Moreover, Sg/St is preferably 0.35 or less, more preferably 0.33 or less, and further preferably 0.31 or less.

Sg1/St is preferably 0.09 or more, more preferably 0.10 or more, and further preferably 0.11 or more. Moreover, Sg1/St is preferably 0.16 or less, more preferably 0.15 or less, and further preferably 0.14 or less.

Sg2/St is preferably 0.08 or more, more preferably 0.09 or more, and further preferably 0.10 or more. Moreover, Sg1/St is preferably 0.14 or less, and more preferably 0.13 or less.

It is considered that proportions of the total groove area, the total circumferential groove area, and the total area of the width direction groove and the sipe with respect to the ground contact area being made to be within the above-mentioned ranges makes it possible to optimize the rigidity of the tread part while increasing the surface area of the tread part to improve the heat dissipation property.

Besides, in the specification, an area S of opening to the tread surface of the small hole, a total land part area Sr, a total center land part area $S_{ce}$, a total circumferential groove area Sg1, and a total area Sg2 of the width direction grooves and sipes are calculated from a ground contact shape when a tire is mounted to a normal rim, an internal pressure of 250 kPa is held in the tire, and then a maximum load capability $W_L$ (kg) is loaded to press the tread against the flat surface. The ground contact shape is obtained by mounting the tire to the normal rim and holding the internal pressure of 250 kPa in the tire, and then, for example, coating ink to the tread 10, loading the maximum load capability $W_L$ (kg) to vertically press the tread 10 against thick paper and the like (at a camber angle of 0 degrees), and transferring thereto ink coated to the tread 10. Moreover, an area obtained by an outer ring of the ground contact shape obtained is to be a ground contact area St of the tread part with all small holes and grooves being buried.

With respect to the tire of the disclosure, where La is a length of the tire in the circumferential direction C and Lb is a total sum of a total Lb1 of width direction W edge component lengths of the width direction grooves 21 and a total Lb2 of width direction W edge component lengths of the sipes 22 and 23, La/Lb is preferably 0.10 or more, more preferably 0.12 or more, further preferably 0.13 or more, and particularly preferably 0.14 or more. Moreover, La/Lb is preferably 0.30 or less, more preferably 0.27 or less, further preferably 0.25 or less, and particularly preferably 0.23 or less. The relationship between the edge component lengths of the width direction grooves 21 and the sipes 22 and 23 being made to be within the above-mentioned predetermined range allows deformation of the tread 10 to be within a predetermined range, making it possible to secure at least a predetermined area of the land parts 11 and 12 and to further improve the effect of the disclosure.

Besides, the "width direction W edge component lengths" of the width direction grooves 21 and the sipes 22, 23 refer to lengths of width direction W projections (the width direction component of the width direction component and the circumferential direction component) of the width direction grooves 21 and the sipes 22, 23.

The tread part of the disclosure has at least one rubber layer. The rubber layer may be formed by a single layer, or it may further have one or more rubber layers on the inner side in the radial direction of a rubber layer (a first layer, a cap rubber layer), the outer surface of which rubber layer constitutes a tread surface. When the rubber layer is constituted by two or more layers, at least one of the two or more rubber layers may be constituted by the above-mentioned predetermined rubber composition, and the above-mentioned predetermined rubber composition is preferably used for the first layer (cap rubber layer).

It is considered that the rubber composition of the disclosure being arranged as the first layer (cap rubber layer) allows a good followability to the road surface and makes it possible to improve riding comfort performance and also to decrease heat dissipation due to friction with the road surface, making it possible to improve pinch cut resistance. Moreover, it is considered that the rubber composition of the disclosure being arranged as the second rubber layer (second layer) being arranged adjacent on the inner side of the cap rubber layer in the radial direction causes a soft rubber layer (second layer constituted by the rubber composition of the disclosure) to be present at a position of the rubber layer, which position is far from the road surface, making it possible to concentrate deformation to the above-mentioned rubber layer and cause deformation efficiently with a low heat-dissipating rubber layer when deformation occurs due to shear of the land part, thereby making it possible to improve pinch cut resistance.

The tread part of the disclosure may comprise a sealant layer, a noise-damping body such as a sponge and the like, other electronic components, and the like, on a tire inner circumferential surface. In this case, the tire weight G (kg) is to be a total weight including the sealant layer, the noise-damping body such as the sponge and the like, the other electronic components, and the like.

From the viewpoint of wet grip performance, an average value tan $\delta$A of loss tangent tan $\delta$ at 15°C to 30°C of the rubber composition of the disclosure is preferably 0.12 or more, more preferably 0.13 or more, and further preferably 0.14. Moreover, from the viewpoint of fuel efficiency, it is 0.20 or less, preferably 0.19 or less, and more preferably 0.18 or less. Besides, the tan $\delta$A of the rubber composition of the disclosure can be determined by averaging numerical values obtained by measuring tan $\delta$ under a condition of a frequency of 10 Hz, an initial strain of 10%, and an amplitude of $\pm$0.5% at a temperature interval of less than 3°C between 15°C and 30°C.

From the viewpoint of fuel efficiency, 30°C tan $\delta$ of the rubber composition of the disclosure, which 30°C tan $\delta$ is measured under a condition of a frequency of 10 Hz, an initial strain of 5%, and an amplitude of $\pm$1.0%, is preferably 0.28 or less, more preferably 0.25 or less, further preferably 0.22 or less, and particularly preferably 0.20 or less. Moreover, from the viewpoint of wet grip performance, it is preferably 0.11 or more, more preferably 0.12 or more, and further preferably 0.13 or more.

<Rubber component>

The rubber component according to the disclosure preferably comprises a butadiene-based rubber. The butadiene-based rubber is not particularly limited as long as it is a polymer having a butadiene skeleton, and examples of the butadiene-based rubber include, for example, a styrene-butadiene rubber (SBR), a butadiene rubber (BR), a styrene-isoprene-butadiene copolymer rubber (SIBR), and the like, and the butadiene-based rubber preferably comprises at least one selected from the group consisting of the SBR and the BR and more preferably comprises the SBR and the BR.

From the viewpoint of the effect of the disclosure, a content of the butadiene-based rubber (preferably the SBR and/or the BR) in the rubber component is preferably 50% by mass or more, more preferably 60% by mass or more, further preferably 70% by mass or more, and particularly preferably 80% by mass or more.

(SBR)

The SBR is not particularly limited, examples of which include a solution-polymerized SBR (S-SBR), an emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Furthermore, hydrogenated additives of these SBRs (hydrogenated SBRs) and the like can also be used. Among them, an S-SBR is preferable, and a modified S-SBR is more preferable.

Examples of the modified SBR include a modified SBR into which a functional group commonly used in this field is introduced. Examples of the above-described functional group include, for example, an amino group (preferably an amino group in which a hydrogen atom of the amino group is substituted with a $C_{1-6}$ alkyl group), an amide group, a silyl group, an alkoxysilyl group (preferably a $C_{1-6}$ alkoxysilyl group), an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably a $C_{1-6}$ alkoxy group), a hydroxyl group, an oxy group, an epoxy group, and the like. Besides, these functional groups may have a substituent. Examples of the substituent include, for example, a functional group such as an amino group, an amide group, an alkoxysilyl group, a carboxyl group, a hydroxyl group, and the like. Moreover, examples of the modified SBR can include a hydrogenated SBR, an epoxidized SBR, a tin-modified SBR, and the like.

As the SBR, an oil-extended SBR can be used, or a non-oil-extended SBR can be used. When the oil-extended SBR is used, an oil-extended amount of SBR, that is, a content of an oil-extended oil comprised in the SBR, is preferably 10 to 50 parts by mass based on 100 parts by mass of a rubber solid content of the SBR.

The SBRs listed above may be used alone or two or more thereof may be used in combination. As the SBRs listed above, for example, those manufactured by and/or commercially available from Sumitomo Chemical Co., Ltd., JSR Corporation, Asahi Kasei Corporation, Zeon Corporation, ZS Elastomer Co., Ltd., etc., can be used.

A styrene content of the SBR is preferably 15% by mass or more, more preferably 20% by mass or more, further preferably 25% by mass or more, and particularly preferably 30% by mass or more from the viewpoints of securing damping in the tread part and wet grip performance. Moreover, it is preferably 60% by mass or less and more preferably 50% by mass or less, from the viewpoints of temperature dependence of grip performance, and abrasion resistance. Besides, in the specification, the styrene content of the SBR is calculated by $^1$H-NMR measurement.

A vinyl content of the SBR is preferably 10 mol% or more, more preferably 13 mol% or more, and further preferably 16 mol% or more, from the viewpoints of ensuring reactivity with silica, rubber strength, and abrasion resistance. Moreover, the vinyl content of the SBR is preferably 70 mol% or less, more preferably 65 mol% or less, and further preferably 60 mol% or less, from the viewpoints of preventing temperature dependence from increasing, wet grip performance, elongation at break, and abrasion resistance. Besides, in the specification, the vinyl content (1,2-bond butadiene unit amount) of the SBR is measured by infrared absorption spectrometry.

A weight-average molecular weight (Mw) of the SBR is preferably 150,000 or more, more preferably 200,000 or more, and further preferably 250,000 or more, from the viewpoint of abrasion resistance. Moreover, the Mw is preferably 2,500,000 or less and more preferably 2,000,000 or less, from the viewpoints of cross-linking uniformity and the like. Besides, the Mw can be determined in terms of a standard polystyrene based on measurement values obtained by a gel permeation chromatography (GPC) (for example, GPC-8000 Series, manufactured by Tosoh Corporation, Detector: differential refractometer, Column: TSKGEL SUPERMULTIPORE HZ-M, manufactured by Tosoh Corporation).

A content of the SBR in the rubber component is preferably 10% by mass or more, more preferably 30% by mass or more, further preferably 40% by mass or more, and particularly preferably 50% by mass or more, from the viewpoint of securing damping in the tread part and wet grip performance. Moreover, it is preferably 95% by mass or less, more preferably 90% by mass or less, further preferably 85% by mass or less, and particularly preferably 80% by mass or less, from the viewpoint of pinch cut resistance improvement caused by suppression of heat dissipation of the

tread part.

(BR)

The BR is not particularly limited, and those commonly used in the tire industry can be used, such as, for example, a BR having a cis content of less than 50% by mass (a low cis BR), a BR having a cis content of 90% or more by mass (a high cis BR), a rare earth-based butadiene rubber synthesized using a rare earth element-based catalyst (a rare earth-based BR), a BR containing a syndiotactic polybutadiene crystal (an SPB-containing BR), a modified BR (a high cis modified BR, a low cis modified BR), and the like. Examples of the modified BR include a BR modified with a functional group or the like similar to that described in the SBRs above. These BRs may be used alone or two or more thereof may be used in combination.

As the high cis BR, those commercially available from Zeon Corporation, Ube Industries, Ltd., JSR Corporation, etc. can be used, for example. When a high cis BR is comprised, abrasion resistance can be improved. The cis content is preferably 95% by mass or more, more preferably 96% by mass or more, further preferably 97% by mass or more, and particularly preferably 98% by mass or more. Besides, in the specification, the cis content (cis-1,4-bond butadiene unit amount) is a value calculated by infrared absorption spectrometry.

The rare earth-based BR is synthesized using a rare earth element-based catalyst, and has a vinyl content of preferably 1.8 mol% or less, more preferably 1.0 mol% or less, and further preferably 0.8% mol or less, and a cis content of preferably 95% by mass or more, more preferably 96% by mass or more, further preferably 97% by mass or more, and particularly preferably 98% by mass or more. As the rare earth-based BR, those commercially available from LANXESS, etc., can be used, for example.

Examples of the SPB-containing BR include those in which a 1,2-syndiotactic polybutadiene crystal is chemically bonded with the BR and dispersed, but not those in which the crystal is simply dispersed in the BR. As such an SPB-comprising BR, those commercially available from Ube Industries, Ltd., etc., can be used.

As the modified BR, a modified butadiene rubber (modified BR) modified with a functional group comprising at least one element selected from the group consisting of silicon, nitrogen, and oxygen at its terminal and/or main chain is suitably used.

Examples of other modified BRs include those obtained by polymerizing 1,3-butadiene with a lithium initiator and then adding a tin compound and in which a modified BR molecule is bonded by a tin-carbon bond at its terminal (a tin-modified BR), and the like. Moreover, the modified BR may be hydrogenated or may not be hydrogenated.

The BRs listed above may be used alone or two or more thereof may be used in combination.

A weight-average molecular weight (Mw) of the BR is preferably 300,000 or more, more preferably 350,000 or more, and further preferably 400,000 or more, from the viewpoint of abrasion resistance. Moreover, it is preferably 2,000,000 or less, and more preferably 1,000,000 or less, from the viewpoints of cross-linking uniformity and the like. Besides, the Mw can be determined in terms of a standard polystyrene based on measurement values obtained by a gel permeation chromatography (GPC) (for example, GPC-8000 Series, manufactured by Tosoh Corporation, Detector: differential refractometer, Column: TSKGEL SUPERMULTIPORE HZ-M, manufactured by Tosoh Corporation).

A content of the BR in the rubber component is preferably 5% by mass or more, more preferably 10% by mass or more, further preferably 15% by mass or more, and particularly preferably 20% by mass or more, from the viewpoints of abrasion resistance and pinch cut resistance. Moreover, it is preferably 50% or less, more preferably 45% by mass or less, further preferably 40% by mass or less, and particularly preferably 35% by mass or less, from the viewpoint of wet grip performance.

In the disclosure, the "total styrene content in styrene-butadiene rubber and butadiene rubber" means a value in which a styrene content of SBR is multiplied by a content of SBR with respect to a total content of SBR and BR (SBR/(SBR+BR)). In the rubber component according to the disclosure, making the total styrene content in styrene-butadiene rubber and butadiene rubber to be 8% by mass or more makes it possible to ensure wet grip performance. The total styrene content in styrene-butadiene rubber and butadiene rubber is preferably 12% by mass or more and more preferably 16% by mass or more. Moreover, the total styrene content in styrene-butadiene rubber and butadiene rubber is preferably 60% by mass or less, more preferably 50% by mass or less, further preferably 40% by mass or less, and particularly preferably 35% by mass or less.

(Other rubber components)

As rubber components, rubber components other than the above-described butadiene-based rubbers may be contained within a range not affecting the effect of the disclosure. As other rubber components, a crosslinkable rubber component commonly used in the tire industry can be used, such as, for example, isoprene-based rubbers, a styrene-isoprene rubber (SIR), a chloroprene rubber (CR), an acrylonitrile-butadiene rubber (NBR), a butyl rubber (IIR), a Halogenized butyl rubber, an ethylene propylene rubber, a polynorbornene rubber, a silicone rubber, a polyethylene chloride

rubber, a fluororubber (FKM), an acrylic rubber (ACM), a hydrin rubber, and the like, and the isoprene-based rubbers are preferable.

Examples of the isoprene-based rubbers include a natural rubber (NR), an isoprene rubber (IR), a reformed NR, a modified NR, a modified IR, and the like. As the NR, those common in the tire industry, such as, for example, SIR20, RSS#3, TSR20, and the like, can be used. The IR is not particularly limited, and, as the IR, those common in the tire industry, such as, for example, an IR 2200 and the like, can be used. Examples of the reformed NR can include a deproteinized natural rubber (DPNR), an ultra pure natural rubber, and the like, examples of the modified NR can include an epoxidized natural rubber (ENR), a hydrogenated natural rubber (HNR), a grafted natural rubber, and the like, and examples of the modified IR can include an epoxidized isoprene rubber, a hydrogenated isoprene rubber, a grafted isoprene rubber, and the like. These isoprene-based rubbers may be used alone or two or more thereof may be used in combination.

When the rubber composition comprises the isoprene-based rubber, a content of the isoprene-based rubber in the rubber component is preferably 50% by mass or less, more preferably 40% by mass or less, and further preferably 30% by mass or less, from the viewpoint of securing damping in the tread part. On the other hand, a lower limit of the content of the isoprene-based rubber in the rubber component is not particularly limited and can be 1% by mass or more, 3% by mass or more, or 5% by mass or more.

<Filler>

The rubber composition according to the disclosure comprises, as a filler, preferably silica and more preferably carbon black and silica. Moreover, the filler may be a filler composed of only carbon black and silica.

(Carbon black)

Carbon black is not particularly limited, and those common in the tire industry, such as GPF, FEF, HAF, ISAF, SAF, and the like, for example, can be used. These carbon blacks may be used alone or two or more thereof may be used in combination.

A nitrogen adsorption specific surface area ($N_2SA$) of carbon black is preferably 50 $m^2/g$ or more, more preferably 80 $m^2/g$ or more, and further preferably 100 $m^2/g$ or more, from the viewpoints of weather resistance and reinforcing property. Moreover, from the viewpoints of dispersibility, fuel efficiency, fracture properties, and pinch cut resistance, it is preferably 250 $m^2/g$ or less and more preferably 220 $m^2/g$ or less. Besides, the $N_2SA$ of carbon black in the specification is a value measured in accordance with method A of Japanese Industrial Standard JIS K 6217-2 "Carbon black for rubber-Fundamental characteristics-Part 2: Determination of specific surface area-Nitrogen adsorption methods-Single-point procedures".

When the rubber composition comprises the carbon black, the content thereof based on 100 parts by mass of the rubber component is, from the viewpoints of weather resistance and reinforcing property, preferably 1 parts by mass or more, more preferably 3 parts by mass or more, and further preferably 5 parts by mass or more. Moreover, it is preferably 50 parts by mass or less, more preferably 40 parts by mass or less, further preferably 30 parts by mass or less, further preferably 20 parts by mass or less, further preferably 15 parts by mass or less, further preferably 10 parts by mass or less, and particularly preferably 8 parts by mass or less, from the viewpoint of pinch cut resistance improvement caused by suppression of heat dissipation of the tread part.

(Silica)

Silica is not particularly limited, and for example, those common in the tire industry can be used, such as silica prepared by a dry process (anhydrous silica), silica prepared by a wet process (hydrous silica), and the like, for example. Among them, hydrous silica prepared by a wet process is preferable because it has many silanol groups. These silicas may be used alone or two or more thereof may be used in combination.

A nitrogen adsorption specific surface area ($N_2SA$) of silica is preferably 140 $m^2/g$ or more, more preferably 150 $m^2/g$ or more, further preferably 160 $m^2/g$ or more, and particularly preferably 170 $m^2/g$ or more, from the viewpoints of reinforcing property, and securing of damping in the tread part. Moreover, it is preferably 350 $m^2/g$ or less, more preferably 300 $m^2/g$ or less, and further preferably 250 $m^2/g$ or less, from the viewpoints of heat dissipation property and processability. Besides, the $N_2SA$ of silica in the specification is a value measured by the BET method in accordance with ASTM D3037-93.

The average primary particle size of silica is preferably 20 nm or less, and more preferably 18 nm or less. The lower limit of the average primary particle size is not particularly limited and is preferably 1 nm or more, more preferably 3 nm or more, and further preferably 5 nm or more. When the average primary particle size of silica is in the above-described ranges, the dispersibility of silica can be improved more, and the reinforcing property, fracture properties, and

abrasion resistance can be further improved. Besides, the average primary particle size of silica can be determined by observing it with a transmission or scanning electron microscope, measuring 400 or more primary particles of silica observed in the field of view, and averaging them.

From the viewpoints of securing damping in the tread part, and wet grip performance, a content of silica based on 100 parts by mass of the rubber component is preferably 40 parts by mass or more, more preferably 50 parts by mass or more, further preferably 60 parts by mass or more, and particularly preferably 70 parts by mass or more. Moreover, from the viewpoint of decreasing the specific gravity of the rubber to realize a light weight and from the viewpoint of pinch cut resistance improvement caused by suppression of heat dissipation of the tread part, it is preferably 120 parts by mass or less, more preferably 110 parts by mass or less, further preferably 105 parts by mass or less, and particularly preferably 100 parts by mass or less.

(Other fillers)

As fillers other than silica and carbon black, those commonly used in the tire industry conventionally, such as aluminum hydroxide, calcium carbonate, alumina, clay, talc, and the like, can be compounded.

A content of silica in 100% by mass of a total of silica and carbon black is preferably 50% by mass or more, more preferably 60% by mass or more, further preferably 70% by mass or more, and particularly preferably 80% by mass or more. Moreover, a content of the silica is preferably 99% by mass or less, more preferably 97% by mass or less, and further preferably 95% by mass or less.

A total content of the filler based on 100 parts by mass of the rubber component is preferably 130 parts by mass or less, more preferably 120 parts by mass or less, further preferably 110 parts by mass or less, and particularly preferably 105 parts by mass or less, from the viewpoint of decreasing the specific gravity of rubber to realize a light weight. Moreover, from the viewpoints of reinforcing property, and securing damping in the tread part, it is preferably 45 parts by mass or more, more preferably 55 parts by mass or more, further preferably 65 parts by mass or more, and particularly preferably 75 parts by mass or more.

(Silane coupling agent)

Silica is preferably used in combination with a silane coupling agent. The silane coupling agent is not particularly limited, and any silane coupling agent conventionally used in combination with silica in the tire industry can be used, and examples thereof include, for example, a mercapto-based silane coupling agent such as 3-mercaptopropyltrimethoxysilane, NXT-Z100, NXT-Z45, NXT, etc., manufactured by Momentive Performance Materials; a sulfide-based silane coupling agent such as bis(3-triethoxysilylpropyl)disulfide, bis(3-triethoxysilylpropyl)tetrasulfide, and the like; a thioester-based silane coupling agent such as 3-octanoylthio-1-propyltriethoxysilane, 3-hexanoylthio-1-propyltriethoxysilane, 3-octanoylthio-1-propyltrimethoxysilane, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl) aminopropyltriethoxysilane, and the like; a glycidoxy-based silane coupling agent such as γ-glycidoxypropyltriethoxysilane, γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like, and the like. The silane coupling agent contains, among them, preferably a sulfide-based silane coupling agent and/or a mercapto-based silane coupling agent and more preferably the below-described polysulfide compound. These silane coupling agents may be used alone or two or more thereof may be used in combination.

The silane coupling agent of the disclosure preferably comprises a polysulfide compound, which polysulfide compound comprises an alkoxysilyl group and a sulfur atom, and, in which polysulfide compound, the number of carbon atoms intervening between a silicon atom constituting the alkoxysilyl group and the sulfur atom is six or more, and can be a sulfide-based silane coupling agent comprising only the above-described polysulfide compound. As such a polysulfide compound, a polysulfide compound represented by the following Formula (I) can be exemplified:

[Chemical Formula 1]

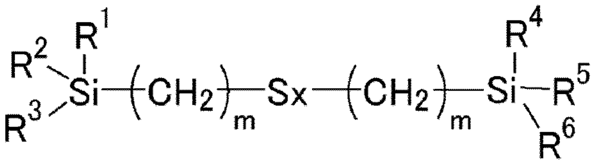

(I)

(Wherein x represents the average number of sulfur atoms; m represents an integer of 6 or more; and each of $R^1$, $R^2$, $R^3$, $R^4$, $R^5$, and $R^6$ independently represents a $C_{1-6}$ alkyl group or $C_{1-6}$ alkoxy group; and at least one of $R^1$, $R^2$, and $R^3$ and at least one of $R^4$, $R^5$, and $R^6$ is the $C_{1-6}$ alkoxy group.)

The symbol x is the average number of sulfur atoms. The symbol x is preferably 2 or more and 12 or less, and more preferably 3.5 or more and 12 or less. Here, the average number of sulfur atoms and the number of silicon atoms in the polysulfide compound are values being the amounts of sulfur and silicon in the composition measured by fluorescent X-rays, which amounts are converted by the molecular weight of each thereof.

The symbol m is preferably 6 to 14 and more preferably 6 to 12.

The number of carbons of the alkyl group is preferably 1 to 5 and more preferably 1 to 4. The alkyl group may be linear, branched, or cyclic. Specific examples include a methyl group, an ethyl group, an n-propyl group, an isopropyl group, an n-butyl group, an iso-butyl group, a sec-butyl group, a tert-butyl group, and the like.

The number of carbons of the alkoxy group is preferably 1 to 5 and more preferably 1 to 4. The alkyl portion of the alkoxy group may be linear, branched, or cyclic. Specific examples include a methoxy group, an ethoxy group, an n-propoxy group, an isopropoxy group, an n-butoxy group, a tert-butoxy group, and the like.

At least two of $R^1$, $R^2$, and $R^3$ and at least two of $R^4$, $R^5$, and $R^6$ are preferably $C_{1-6}$ alkoxy groups.

Besides, $R^1$ and $R^2$ and/or $R^4$ and $R^5$ may be linked to form a ring structure together with a silicon atom to which the linked $R^1$ and $R^2$ and/or $R^4$ and $R^5$ are bound. For example, examples of the above include a structure in which an ethoxy group as $R^1$ and a methyl group as $R^2$ are linked to form a divalent group of "$-O-C_2H_4-CH_2-$", which is bound to a silicon atom.

The polysulfide compound represented by the Formula (I) can be produced by a method disclosed in JP 2018-065954 A, for example. Specifically, a halogen-containing organosilicon compound of a Formula (I-1) disclosed in JP 2018-065954 A, anhydrous sodium sulfide ($Na_2S$), and optionally sulfur are subjected to a reaction. When carrying out the reaction, to control the sulfide chain, sulfur may optionally be added, and the compounding ratio of the compound of Average Compositional Formula (I-1), anhydrous sodium sulfide, and sulfur may be determined so as to give a target compound of Average Compositional Formula (I). For example, when a compound of Average Compositional Formula (I) wherein x is 3.5 is desired, 1.0 mol of anhydrous sodium sulfide, 2.5 mol of sulfur, and 2.0 mol of the compound of Formula (I-1) may be reacted.

When the rubber composition comprises the silane coupling agent, a total content of the silane coupling agent based on 100 parts by mass of the rubber component is, from the viewpoint of enhancing the dispersibility of silica, preferably 0.5 parts by mass or more, more preferably 1.0 parts by mass or more, further preferably 2.0 parts by mass or more, and particularly preferably 4.0 parts by mass or more. Moreover, it is preferably 20 parts by mass or less, more preferably 12 parts by mass or less, further preferably 10 parts by mass or less, and particularly preferably 8.0 parts by mass or less, from the viewpoint of preventing deterioration of abrasion resistance.

A content of the silane coupling agent (when the silane coupling agent in a plurality is used in combination, a total content of all of the silane coupling agents) based on 100 parts by mass of silica is preferably 1.0 parts by mass or more, more preferably 3.0 parts by mass or more, and further preferably 5.0 parts by mass or more, from the viewpoint of enhancing the dispersibility of silica. Moreover, it is preferably 20 parts by mass or less, more preferably 15 parts by mass or less, and further preferably 12 parts by mass or less, from the viewpoints of cost and processability.

<Resin component>

The rubber composition according to the disclosure preferably comprises a resin component. The resin component is not particularly limited, and examples thereof include a petroleum resin, a terpene-based resin, a rosin-based resin, a phenol-based resin, and the like being commonly used in the tire industry, and these resin components may be used alone or two or more thereof may be used in combination.

Examples of the petroleum resin include a C5-based petroleum resin, an aromatic-based petroleum resin, and a C5-C9-based petroleum resin, for example. These petroleum resins may be used alone or two or more thereof may be used in combination.

In the specification, the "C5-based petroleum resin" refers to a resin obtained by polymerizing a C5 fraction. Examples of the C5 fraction include, for example, a petroleum fraction equivalent to 4 to 5 carbon atoms such as cyclopentadiene, pentene, pentadiene, isoprene, and the like. As the C5-based petroleum resin, a dicyclopentadiene resin (DCPD resin) is suitably used.

In the specification, the "aromatic-based petroleum resin" refers to a resin obtained by polymerizing a C9 fraction, and may be hydrogenated or modified. Examples of the C9 fraction include, for example, a petroleum fraction equivalent to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are suitably used. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene

is more preferable, because it is economical, easy to be processed, and good in heat generation. As the aromatic vinyl-based resin, for example, those commercially available from Kraton Corporation, Eastman Chemical Company, etc. can be used.

In the specification, a "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as α-pinene, β-pinene, limonene, and dipentene; an aromatic-modified terpene resin made from the terpene compound and an aromatic compound; a terpene phenol resin made from a terpene compound and a phenol-based compound; and those obtainable by hydrogenating these terpene-based resins (hydrogenated terpene-based resins). Examples of the aromatic compound used as a raw material for the aromatic-modified terpene resin include, for example, styrene, α-methylstyrene, vinyltoluene, divinyltoluene, and the like. Examples of the phenol-based compound used as a raw material for the terpene phenol resin include, for example, phenol, bisphenol A, cresol, xylenol, and the like.

The rosin-based resin is not particularly limited, and examples thereof include, for example, a natural resin rosin, and a rosin modified resin being the natural resin rosin modified by hydrogenation, disproportionation, dimerization, or esterification.

The phenol-based resin is not particularly limited, and examples thereof include a phenolformaldehyde resin, an alkylphenolformaldehyde resin, an alkylphenol acetylene resin, an oil-modified phenolformaldehyde resin, and the like.

A softening point of the resin component is preferably 60°C or higher and more preferably 65°C or higher, from the viewpoint of wet grip performance. Moreover, it is preferably 150°C or lower, more preferably 140°C or lower, and further preferably 130°C or lower, from the viewpoints of processability and improvement in dispersibility of a rubber component with a filler. Besides, in the specification, the softening point can be defined as a temperature at which a sphere drops when the softening point specified in Japanese Industrial Standard JIS K 6220-1: 2001 is measured with a ring and ball softening point measuring device.

The resin component is preferably the aromatic-based petroleum resin and more preferably the aromatic vinyl-based resin, from the viewpoint of achieving a good balance of riding comfort performance, pinch cut resistance, and wet grip performance.

When the rubber composition comprises the resin component, the content of thereof based on 100 parts by mass of the rubber component is, from the viewpoints of riding comfort performance and wet grip performance, preferably 1 parts by mass or more, more preferably 3 parts by mass or more, and further preferably 5 parts by mass or more. Moreover, it is preferably 60 parts by mass or less, more preferably 50 parts by mass or less, further preferably 40 parts by mass or less, and particularly preferably 30 parts by mass or less, from the viewpoint of pinch cut resistance.

<Other compounding agents>

The rubber composition according to the disclosure can appropriately comprise compounding agents commonly used in the tire industry conventionally, such as, for example, oil, wax, a processing aid, an antioxidant, stearic acid, zinc oxide, a vulcanizing agent such as sulfur, etc., a vulcanization accelerator, and the like, in addition to the above-described components.

Examples of oil include, for example, a process oil, a vegetable oil and fat, an animal oil and fat, and the like. Examples of the process oil include a paraffin-based process oil, a naphthene-based process oil, an aromatic-based process oil, and the like. Moreover, as an environmental measure, a process oil having a low content of a polycyclic aromatic compound (PCA) can also be used. Examples of the process oil having a low content of a PCA include a treated distillate aromatic extract (TDAE), which is an oil aromatic-based process oil being reextracted; an aromatic substitute oil being a mixed oil of asphalt and naphthenic oil; mild extraction solvates (MES); a heavy naphthenic oil; and the like.

When the rubber composition comprises the oil, the content of thereof based on 100 parts by mass of the rubber component is, from the viewpoint of processability, preferably 1 parts by mass or more, more preferably 2 parts by mass or more, and further preferably 3 parts by mass or more. Moreover, it is preferably 80 parts by mass or less, more preferably 60 parts by mass or less, and further preferably 40 parts by mass or less, from the viewpoints of fuel efficiency and pinch cut resistance. Besides, in the specification, the content of oil also includes an amount of oil contained in an oil-extended rubber.

When the rubber composition comprises the wax, the content thereof based on 100 parts by mass of the rubber component is, from the viewpoint of weather resistance of a rubber, preferably 0.5 parts by mass or more, and more preferably 1 part by mass or more. Moreover, it is preferably 10 parts by mass or less, and more preferably 5 parts by mass or less, from the viewpoint of preventing whitening of a tire due to bloom.

As the processing aid, fatty acid metal salt aimed at reducing viscosity and securing mold releasability of an

unvalcanized rubber and those widely available on a commercial basis as compatilizers from the viewpoint of suppressing micro-level layer separation of the rubber component can be used.

When the rubber composition comprises the processing aid, the content thereof based on 100 parts by mass of the rubber component is, from the viewpoint of exhibiting the effect of improving processability, preferably 0.5 parts by mass or more and more preferably 1 part by mass or more. Moreover, it is preferably 10 parts by mass or less and more preferably 8 parts by mass or less, from the viewpoints of abrasion resistance and breaking strength.

The antioxidant is not particularly limited, and examples thereof include, for example, each amine-based, quinoline-based, quinone-based, phenol-based, and imidazole-based compound, and an antioxidant such as a carbamate metal salt.

When the rubber composition comprises the antioxidant, the content thereof based on 100 parts by mass of the rubber component is, from the viewpoint of ozone crack resistance of a rubber, preferably 0.5 parts by mass or more and more preferably 1 parts by mass or more. Moreover, it is preferably 10 parts by mass or less and more preferably 5 parts by mass or less, from the viewpoints of abrasion resistance and wet grip performance.

When the rubber composition comprises the stearic acid, the content thereof based on 100 parts by mass of the rubber component is, from the viewpoint of processability, preferably 0.5 parts by mass or more and more preferably 1 parts by mass or more. Moreover, it is preferably 10 parts by mass or less and more preferably 5 parts by mass or less, from the viewpoint of vulcanization rate.

When the rubber composition comprises the zinc oxide, the content thereof based on 100 parts by mass of the rubber component is, from the viewpoint of processability, preferably 0.5 parts by mass or more and more preferably 1 parts by mass or more. Moreover, it is preferably 10 parts by mass or less and more preferably 5 parts by mass or less, from the viewpoint of abrasion resistance.

Sulfur is suitably used as the vulcanizing agent. As sulfur, a powdered sulfur, an oil-treated sulfur, a precipitated sulfur, a colloidal sulfur, an insoluble sulfur, a highly dispersible sulfur, and the like can be used.

When the rubber composition comprises sulfur as the vulcanizing agent, a content thereof based on 100 parts by mass of the rubber component is preferably 0.1 parts by mass or more, more preferably 0.3 parts by mass or more, and further preferably 0.5 parts by mass or more, from the viewpoint of securing a sufficient vulcanization reaction. Moreover, it is preferably 5.0 parts by mass or less, more preferably 4.0 parts by mass or less, and further preferably 3.0 parts by mass or less, from the viewpoint of preventing deterioration. Besides, a content of a vulcanizing agent when using an oil-containing sulfur as the vulcanizing agent shall be a total content of pure sulfur amounts comprised in the oil-containing sulfur.

Examples of vulcanizing agents other than sulfur include, for example, alkylphenol-sulfur chloride condensate, 1,6-hexamethylene-sodium dithiosulfate dehydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

The vulcanization accelerator is not particularly limited, and examples of the vulcanization accelerators include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and, among them, from the viewpoint that desired effects are more suitably obtained, the sulfenamide-based vulcanization accelerator and the guanidine-based vulcanization accelerator are preferable.

Examples of the sulfenamide-based vulcanization accelerator include, for example, N-cyclohexyl-2-benzothiazolylsulfenamide (CBS), N-tert-butyl-2-benzothiazolylsulfenamide (TBBS), N-oxyethylene-2-benzothiazolylsulfenamide, N,N'-diisopropyl-2-benzothiazolylsulfenamide, N,N-dicyclohexyl-2-benzothiazolylsulfenamide, and the like. Examples of the thiazole-based vulcanization accelerator include 2-mercaptobenzothiazole, dibenzothiazolyl disulfide, and the like. Examples of the guanidine-based vulcanization accelerator include diphenylguanidine (DPG), di-o-tolylguanidine, o-tolylbiguanidine, and the like. These vulcanization accelerators may be used alone or two or more thereof may be used in combination.

When the rubber composition comprises the vulcanization accelerator, the content thereof based on 100 parts by mass of the rubber component is preferably 1.0 part by mass or more, more preferably 1.5 parts by mass or more, and further preferably 2.0 part by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less, and particularly preferably 5.0 parts by mass or less. When the content of the vulcanization accelerators is made to be within the above-described ranges, there is a tendency to be able to secure breaking strength and elongation.

The rubber composition according to the disclosure can be manufactured by a known method. For example, it can be manufactured by kneading each of the previously-described components using a rubber kneading apparatus such as an open roll and a closed type kneader (Bunbury mixer, kneader, etc.).

The kneading step comprises, for example, a base kneading step of kneading compounding agents and additives other than vulcanizing agents and vulcanization accelerators, and a final kneading (F kneading) step of adding vulcanizing

agents and vulcanization accelerators to the kneaded product obtained in the base kneading step and kneading them. Furthermore, the base kneading step can be divided into a plurality of steps, if desired. Kneading conditions are not particularly limited, and, for example, a method of kneading at a discharge temperature of 150 to 170°C for 3 to 10 minutes in the base kneading step and kneading at 70 to 110°C for 1 to 5 minutes in the final kneading step is exemplified.

[Tire]

The tire according to the disclosure comprises a tread composed of the above-described rubber composition, examples of the tire include a tire for a passenger car, a tire for a truck/bus, a tire for a motorcycle, a high-performance tire, and the like, and the tire is preferably the tire for a passenger car. Besides, the high-performance tire in the specification is a tire having a particularly good grip performance and is a concept even including a racing tire used for a racing vehicle. Moreover, the tire for a passenger car refers to a tire assumed to be mounted on a four-wheel driven automobile, which tire has the maximum load capability of 1,000 kg or less. Moreover, the tire of the disclosure can be used as a tire for all seasons, a summer tire, a winter tire such as a studless tire, and the like.

The tire comprising the tread composed of the above-described rubber composition can be manufactured by a usual method. In other words, the tire can be manufactured by extruding unvulcanized rubber compositions compounded with each of the above-described components based on the rubber component as necessary into shapes of at least one rubber layer constituting the tread, attaching them together with other tire members on a tire molding machine, and molding them by a usual method to form an unvulcanized tire, followed by heating and pressurizing this unvulcanized tire in a vulcanizing machine. Vulcanization conditions are not particularly limited, and, for example, a method of vulcanizing at 150 to 200°C for 10 to 30 minutes is exemplified.

EXAMPLE

Although the disclosure will be described below based on Examples, the disclosure is not to be limited only to these Examples.

Various chemicals used in Examples and Comparative examples are shown below:

NR: TSR20

SBR1: a modified S-SBR manufactured in the below-described Manufacturing example 1 (styrene content: 40% by mass, vinyl content: 25 mol%, Mw: 1,000,000, non-oil-extended product)

SBR2: a modified S-SBR manufactured in the below-described Manufacturing example 2 (styrene content: 25% by mass, vinyl content: 25 mol%, Mw: 1,000,000, non-oil-extended product)

BR: UBEPOL BR (registered trademark) 150B (cis content: 97% by mass, Mw: 440,000), manufactured by Ube Industries, Ltd.

Carbon black: Diablack N220 ($N_2SA$: 115 $m^2/g$), manufactured by Mitsubishi Chemical Corporation

Silica: ULTRASIL (registered trademark) VN3 ($N_2SA$: 175 $m^2/g$, average primary particle size: 17 nm), manufactured by Evonik Degussa

Silane coupling agent 1: Si266 (bis(3-triethoxysilylpropyl)disulfide), manufactured by Evonik Degussa

Silane coupling agent 2: NXT-Z45 (mercapto-based silane coupling agent), manufactured by Momentive Performance Materials

Silane coupling agent 3: A sulfide-based silane coupling agent consisting of a polysulfide compound manufactured in the below-described Manufacturing example 3

Oil: VivaTec 400 (TDAE oil), manufactured by H&R Group

Resin component: Sylvares SA85 (Copolymer of $\alpha$-methylstyrene and styrene, Softening point: 85°C), manufactured by Kraton Corporation

Zinc oxide: Zinc oxide No. 1, manufactured by Mitsui Mining & Smelting Co., Ltd.

Stearic acid: Bead stearic acid "Tsubaki", manufactured by NOF CORPORATION

Sulfur: HK-200-5 (5% oil-containing powdered sulfur), manufactured by Hosoi Chemical Industry Co., Ltd

Vulcanization accelerator 1: Nocceler CZ (N-cyclohexyl-2-benzothiazolylsulfenamide (CBS)), manufactured by Ouchi Shinko Chemical Industrial Co., Ltd.

Vulcanization accelerator 2: Nocceler D (1,3-diphenylguanidine (DPG)), manufactured by Ouchi Shinko Chemical Industrial Co., Ltd.

Manufacturing example 1: Synthesis of SBR1

Cyclohexane, tetrahydrofuran, styrene, and 1,3-butadiene were charged into a nitrogen-substituted autoclave reactor. The ratio of styrene and 1,3-butadiene was adjusted to give the styrene content of 40% by mass. After the

temperature of the contents of the reactor was adjusted to 20°C, n-butyllithium was added to initiate polymerization. Polymerization was performed under an adiabatic condition, and the temperature reached 80°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a modifying agent to perform reaction. After completion of the polymerization reaction, 2,6-di-tert-butyl-p-cresol was added. Next, the mixed product was removed of solvent by steam stripping and dried by a heat roll which temperature was adjusted to 110°C to obtain an SBR1.

Manufacturing example 2: Synthesis of SBR2

Except the ratio of styrene and 1,3-butadiene being adjusted to give the styrene content of 25% by mass, SBR2 was obtained in a method similar to that for Manufacturing example 1.

Manufacturing example 3: Synthesis of Silane coupling agent 3

A 2 L separable flask equipped with a stirrer, a reflux condenser, a dropping funnel, and a thermometer was charged with 78.0 g (1.0 mol) of anhydrous sodium sulfide, 80.3 g (2.5 mol) of sulfur, and 480 g of ethanol, followed by heating to 80°C. Thereafter, into the resulting mixture was dropwise added 566 g (2.0 mol) of 6-chlorohexyltriethoxysilane, and the mixture was heated with stirring at 80°C for 10 hours. The reaction solution was subjected to pressure filtration using a filter plate to obtain a filtrate from which salts formed through the reaction were removed. The filtrate obtained was heated to 100°C, and the ethanol was evaporated off under a reduced pressure of 10 mmHg or less to obtain the Silane coupling agent 3 (the amount of sulfur: 18.5% by mass, x=3.5, m=6).

(Examples and Comparative examples)

According to the compounding formulations shown in Tables 1 to 4, using a 1.7 L closed Banbury mixer, chemicals other than sulfur and vulcanization accelerators were kneaded for 1 to 10 minutes until a discharge temperature reached 150 to 160°C to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was subjected to press vulcanization for 12 minutes under a condition of 170°C to produce a test vulcanized rubber composition.

Moreover, the obtained unvulcanized rubber composition was used extrude it into shapes of a first layer (thickness: 7 mm) of the tread with an extruder comprising a base having a predetermined shape and attach it together with a second layer (thickness: 2 mm) of the tread and other tire members to produce an unvulcanized tire, followed by press vulcanization for 12 minutes under a condition of 170°C to obtain each of test tires described in Tables 1 to 4.

The tire cross-sectional width Wt (mm), tire cross-sectional height Ht (mm), and tire outer diameter Dt (mm) were measured with each of the test tires being filled with air at 250 kPa, and the maximum load capability $W_L$ (kg) and the value $((\pi/4)\times(Dt^2/Wt))$ of the Mathematical expression (1) were calculated. Moreover, the following evaluation was performed for the obtained vulcanized test rubber composition and test tire.

<tan δ measurement>

Each of vulcanized rubber test pieces was produced by cutting it out for a length of 20 mm x a width of 4 mm x a thickness of 2 mm from each of the rubber layers of the tread part of each of the test tires such that the tire circumferential direction is a long side. For each of the rubber test pieces, using EPLEXOR series manufactured by GABO Qualimeter Testanlagen GmbH, loss tangent tan δ was measured at the temperature between 15°C and 30°C in 3°C intervals, under conditions of a frequency of 10 Hz, an initial strain of 10%, and an amplitude of ±0.5%, and obtained numerical values were averaged to determine an average value tan δA of tan δ at 15°C to 30°C. Moreover, tan δ at 30°C was measured under conditions of a frequency of 10 Hz, an initial strain of 5%, and a dynamic strain of ±1.0%. The results are shown in Tables 1 to 4. Besides, the thickness direction of a sample was set to be the tire radial direction.

<Fuel efficiency>

Each of the test tires was filled with air at 250 kPa and the rolling resistance coefficient of each of the test tires was measured in accordance with Japanese Industrial Standard JIS D 4234: 2009. A value of the inverse of the rolling resistance coefficient was displayed as an index with Reference comparative example (Comparative example 1 in Tables 1 and 2 and Comparative example 9 in Tables 3 and 4) as 100. The index indicates that the greater the index, the less

the rolling resistance and the better the fuel efficiency.

<Pinch cut resistance>

Each of the test tires was filled with air at 250 kPa and mounted to an automobile with a displacement of 2,000 cc. After mounting, cargo was loaded to a vehicle to apply, to the tire, a vertical load corresponding to a normal load. A projection having a height of 200 mm was provided on a road surface of a test course and this vehicle was made to run to run over this projection with a front wheel. This tire was observed visually to check for the presence/absence of an occurrence of a damage due to pinch cut. Starting from 40 km/h, the speed of the vehicle was increased in steps by 0.5 km/h to measure the speed at which the damage occurred with the tire, and the measured result was displayed as an index with Reference comparative example (Comparative example 1 in Tables 1 and 2 and Comparative example 9 in Tables 3 and 4) as 100. The index indicates that the greater the index is, the less likely the pinch cut occurs.

Table 1

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Compounding amount (part by mass) | | | | | | | | | | | |
| NR | - | - | - | - | - | - | - | - | - | - | 30 |
| SBR1 | 80 | 80 | 80 | 80 | 80 | 80 | 80 | 80 | - | - | 50 |
| SBR2 | - | - | - | - | - | - | - | - | 80 | 80 | - |
| BR | 20 | 20 | 20 | 20 | 20 | 20 | 20 | 20 | 20 | 20 | 20 |
| Carbon black | 5.0 | 5.0 | 5.0 | 5.0 | 5.0 | 5.0 | 5.0 | 5.0 | 5.0 | 5.0 | 5.0 |
| Silica | 85 | 85 | 70 | 70 | 70 | 70 | 70 | 70 | 70 | 70 | 85 |
| Silane coupling agent 1 | 6.8 | 6.8 | 5.6 | 5.6 | 5.6 | 5.6 | - | - | - | - | 6.8 |
| Silane coupling agent 2 | - | - | - | - | - | - | 5.6 | - | 5.6 | - | - |
| Silane coupling agent 3 | - | - | - | - | - | - | - | 5.6 | - | 5.6 | - |
| Oil | 12 | 12 | 5.0 | 5.0 | 5.0 | 5.0 | 5.0 | 5.0 | - | - | 12 |
| Resin component | 10 | 10 | 10 | 10 | 10 | 10 | 10 | 10 | 30 | 30 | 10 |
| Zinc oxide | 3.0 | 3.0 | 3.0 | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 | 2.0 | 2.0 | 2.0 |
| Vulcanization accelerator 2 | 1.2 | 1.2 | 1.0 | 1.0 | 1.0 | 1.0 | 1.0 | 1.0 | 1.0 | 1.0 | 1.2 |
| Rubber layer | | | | | | | | | | | |
| tan δ A | 0.191 | 0.191 | 0.183 | 0.183 | 0.183 | 0.183 | 0.165 | 0.146 | 0.148 | 0.141 | 0.174 |
| tan δ (30°C) | 0.173 | 0.173 | 0.154 | 0.154 | 0.154 | 0.154 | 0.142 | 0.129 | 0.134 | 0.128 | 0.161 |
| Specific gravity | 1.185 | 1.185 | 1.170 | 1.170 | 1.170 | 1.170 | 1.173 | 1.171 | 1.168 | 1.167 | 1.183 |
| Total styrene content (% by mass) | 32 | 32 | 32 | 32 | 32 | 32 | 32 | 32 | 20 | 20 | 29 |
| Tire | | | | | | | | | | | |
| Tire size | 175/60 R19 | 175/60 R19 | 175/60 R19 | 175/60 R19 | 175/60 R19 | 155/70 R19 | 155/70 R19 | 155/70 R19 | 155/70 R19 | 155/70 R19 | 155/70 R19 |
| G (kq) | 6.9 | 6.1 | 6.0 | 5.8 | 5.4 | 5.1 | 5.1 | 5.0 | 5.0 | 5.0 | 5.1 |
| $W_L$ (kg) | 476 | 478 | 476 | 468 | 447 | 438 | 439 | 443 | 444 | 444 | 445 |

(continued)

| Tire | | | | | | | | | | | |
|---|---|---|---|---|---|---|---|---|---|---|---|
| $G/W_L$ | 0.0145 | 0.0127 | 0.0126 | 0.0125 | 0.0121 | 0.0116 | 0.0116 | 0.0112 | 0.0113 | 0.0113 | 0.0114 |
| Value of Mathematical expression (1) | 2143 | 2149 | 2125 | 2155 | 2225 | 2485 | 2462 | 2453 | 2483 | 2506 | 2460 |
| $S(mm^2)$ | - | 3.1 | 3.1 | 3.1 | 3.1 | 2.7 | 2.7 | 2.7 | 2.7 | 2.7 | 2.7 |
| $S_{ce}/Sr$ | 0.46 | 0.46 | 0.46 | 0.46 | 0.46 | 0.44 | 0.44 | 0.44 | 0.44 | 0.44 | 0.44 |
| La/Lb | 0.18 | 0.18 | 0.18 | 0.18 | 0.18 | 0.20 | 0.20 | 0.20 | 0.20 | 0.20 | 0.20 |
| Sg/St | 0.27 | 0.27 | 0.27 | 0.27 | 0.27 | 0.29 | 0.29 | 0.29 | 0.29 | 0.29 | 0.29 |
| Sg1/St | 0.14 | 0.14 | 0.14 | 0.14 | 0.14 | 0.16 | 0.16 | 0.16 | 0.16 | 0.16 | 0.16 |
| Sg2/St | 0.13 | 0.13 | 0.13 | 0.13 | 0.13 | 0.13 | 0.13 | 0.13 | 0.13 | 0.13 | 0.13 |
| Index | | | | | | | | | | | |
| Fuel efficiency | 122 | 128 | 129 | 136 | 137 | 140 | 145 | 149 | 147 | 153 | 133 |
| Pinch cut resistance | 128 | 121 | 120 | 112 | 117 | 114 | 111 | 108 | 118 | 115 | 128 |

Table 2

| | Comparative example | | | | | | | |
|---|---|---|---|---|---|---|---|---|
| | 1 | 2 | 3 | 4 | 5 | 6 | 7 | 8 |
| Compounding amount (part by mass) | | | | | | | | |
| NR | - | - | - | - | - | - | - | - |
| SBR1 | 80 | 80 | 80 | 80 | 80 | 80 | 80 | 80 |
| SBR2 | - | - | - | - | - | - | - | - |
| BR | 20 | 20 | 20 | 20 | 20 | 20 | 20 | 20 |
| Carbon black | 5.0 | 5.0 | 5.0 | 5.0 | 5.0 | 5.0 | 5.0 | 5.0 |
| Silica | 100 | 100 | 85 | 100 | 70 | 70 | 100 | 70 |
| Silane coupling agent 1 | 8.0 | 8.0 | 6.8 | 8.0 | - | - | 8.0 | - |
| Silane coupling agent 2 | - | - | - | - | 5.6 | - | - | 5.6 |
| Silane coupling agent 3 | - | - | - | - | - | 5.6 | - | - |
| Oil | 20 | 20 | 12 | 20 | 5.0 | 5.0 | 20 | 5.0 |
| Resin component | 10 | 10 | 10 | 10 | 10 | 10 | 10 | 10 |
| Zinc oxide | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 |
| Vulcanization accelerator 2 | 1.5 | 1.5 | 1.5 | 1.5 | 1.0 | 1.0 | 1.5 | 1.0 |
| Rubber layer | | | | | | | | |
| tan δ A | 0.216 | 0.216 | 0.191 | 0.216 | 0.165 | 0.146 | 0.216 | 0.165 |
| tan δ (30°C) | 0.198 | 0.198 | 0.173 | 0.198 | 0.142 | 0.129 | 0.198 | 0.142 |
| Specific gravity | 1.215 | 1.215 | 1.185 | 1.215 | 1.173 | 1.171 | 1.215 | 1.173 |
| Total styrene content (% by mass) | 32 | 32 | 32 | 32 | 32 | 32 | 32 | 32 |
| Tire | | | | | | | | |
| Tire size | 245/45R 19 | 245/45R 19 | 245/45R 19 | 175/60R 19 | 175/60R 19 | 175/60R 19 | 175/60R 19 | 245/45R 19 |
| G (kg) | 10.2 | 9.6 | 10.4 | 7.4 | 7.5 | 7.4 | 7.0 | 9.4 |
| $W_L$ (kg) | 645 | 652 | 653 | 472 | 478 | 474 | 472 | 650 |
| $G/W_L$ | 0.0158 | 0.0148 | 0.0160 | 0.0157 | 0.0156 | 0.0157 | 0.0148 | 0.0145 |
| Value of Mathematical expression (1) | 1582 | 1573 | 1584 | 2168 | 2149 | 2155 | 2168 | 1580 |
| S($mm^2$) | 3.1 | 3.1 | 3.1 | 3.1 | 3.1 | 3.1 | 3.1 | 3.1 |
| $S_{ce}/Sr$ | 0.50 | 0.50 | 0.50 | 0.46 | 0.46 | 0.46 | 0.46 | 0.50 |
| La/Lb | 0.13 | 0.13 | 0.13 | 0.18 | 0.18 | 0.18 | 0.18 | 0.13 |
| Sg/St | 0.24 | 0.24 | 0.24 | 0.27 | 0.27 | 0.27 | 0.27 | 0.24 |

(continued)

| | | | | | | | | |
|---|---|---|---|---|---|---|---|---|
| Tire | | | | | | | | |
| Sg1/St | 0.10 | 0.10 | 0.10 | 0.14 | 0.14 | 0.14 | 0.14 | 0.10 |
| Sg2/St | 0.14 | 0.14 | 0.14 | 0.13 | 0.13 | 0.13 | 0.13 | 0.14 |
| Index | | | | | | | | |
| Fuel efficiency | 100 | 105 | 107 | 104 | 115 | 118 | 109 | 112 |
| Pinch cut resistance | 100 | 89 | 84 | 96 | 81 | 78 | 93 | 183 |

Table 3

| | Example | | | | | | | |
|---|---|---|---|---|---|---|---|---|
| | 12 | 13 | 14 | 15 | 16 | 17 | 18 | 19 |
| Compounding amount (part by mass) | | | | | | | | |
| NR | - | - | - | - | - | - | - | 30 |
| SBR1 | 80 | 80 | 80 | 80 | 80 | 80 | 80 | 50 |
| SBR2 | - | - | - | - | - | - | - | - |
| BR | 20 | 20 | 20 | 20 | 20 | 20 | 20 | 20 |
| Carbon black | 5.0 | 5.0 | 5.0 | 5.0 | 5.0 | 5.0 | 5.0 | 5.0 |
| Silica | 85 | 85 | 70 | 70 | 70 | 70 | 70 | 85 |
| Silane coupling agent 1 | 6.8 | 6.8 | 5.6 | 5.6 | 5.6 | 5.6 | - | 6.8 |
| Silane coupling agent 2 | - | - | - | - | - | - | 5.6 | - |
| Silane coupling agent 3 | - | - | - | - | - | - | - | - |
| Oil | 12 | 12 | 5.0 | 5.0 | 5.0 | 5.0 | 5.0 | 12 |
| Resin component | 10 | 10 | 10 | 10 | 10 | 10 | 10 | 10 |
| Zinc oxide | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 |
| Vulcanization accelerator 2 | 1.2 | 1.2 | 1.0 | 1.0 | 1.0 | 1.0 | 1.0 | 1.2 |
| Rubber layer | | | | | | | | |
| tan δ A | 0.191 | 0.191 | 0.183 | 0.183 | 0.183 | 0.183 | 0.165 | 0.174 |
| tan δ (30°C) | 0.173 | 0.173 | 0.154 | 0.154 | 0.154 | 0.154 | 0.142 | 0.161 |
| Specific gravity | 1.185 | 1.185 | 1.170 | 1.170 | 1.170 | 1.170 | 1.173 | 1.183 |
| Total styrene content | 32 | 32 | 32 | 32 | 32 | 32 | 32 | 29 |
| (% by mass) | | | | | | | | |
| Tire | | | | | | | | |
| Tire size | 205/55R | 205/55R | 205/55R | 205/55R | 195/50R | 185/45R | 185/45R | 185/45R |

(continued)

| Tire | | | | | | | | |
|---|---|---|---|---|---|---|---|---|
| | 18 | 18 | 18 | 18 | 19 | 20 | 20 | 20 |
| G (kq) | 7.9 | 7.1 | 6.9 | 6.5 | 5.6 | 4.8 | 4.8 | 4.8 |
| $W_L$ (kg) | 558 | 556 | 556 | 552 | 482 | 414 | 415 | 416 |
| $G/W_L$ | 0.0141 | 0.0127 | 0.0125 | 0.0117 | 0.0117 | 0.0116 | 0.0115 | 0.0115 |
| Value of Mathematical expression (1) | 1779 | 1801 | 1760 | 1805 | 1851 | 1945 | 1918 | 1934 |
| S($mm^2$) | 12.1 | 3.1 | 3.1 | 3.1 | 3.1 | 3.1 | 3.1 | 3.1 |
| $S_{ce}$/Sr | 0.48 | 0.48 | 0.48 | 0.48 | 0.47 | 0.47 | 0.47 | 0.47 |
| La/Lb | 0.15 | 0.15 | 0.15 | 0.15 | 0.16 | 0.17 | 0.17 | 0.17 |
| Sg/St | 0.25 | 0.25 | 0.25 | 0.25 | 0.26 | 0.26 | 0.26 | 0.26 |
| Sg1/St | 0.12 | 0.12 | 0.12 | 0.12 | 0.13 | 0.13 | 0.13 | 0.13 |
| Sg2/St | 0.13 | 0.13 | 0.13 | 0.13 | 0.13 | 0.13 | 0.13 | 0.13 |
| Index | | | | | | | | |
| Fuel efficiency | 117 | 122 | 123 | 136 | 140 | 143 | 148 | 132 |
| Pinch cut resistance | 136 | 128 | 130 | 112 | 111 | 108 | 107 | 130 |

Table 4

| | Comparative example | | | | | | | |
|---|---|---|---|---|---|---|---|---|
| | 9 | 10 | 11 | 12 | 13 | 14 | 15 | 16 |
| Compounding amount (part by mass) | | | | | | | | |
| NR | - | - | - | - | - | - | - | - |
| SBR1 | 80 | 80 | 80 | 80 | 80 | 80 | 80 | 80 |
| SBR2 | - | - | - | - | - | - | - | - |
| BR | 20 | 20 | 20 | 20 | 20 | 20 | 20 | 20 |
| Carbon black | 5.0 | 5.0 | 5.0 | 5.0 | 5.0 | 5.0 | 5.0 | 5.0 |
| Silica | 100 | 100 | 85 | 100 | 70 | 70 | 100 | 70 |
| Silane coupling agent 1 | 8.0 | 8.0 | 6.8 | 8.0 | - | - | 8.0 | - |
| Silane coupling agent 2 | - | - | - | - | 5.6 | - | - | 5.6 |
| Silane coupling agent 3 | - | - | - | - | - | 5.6 | - | - |
| Oil | 20 | 20 | 12 | 20 | 5.0 | 5.0 | 20 | 5.0 |
| Resin component | 10 | 10 | 10 | 10 | 10 | 10 | 10 | 10 |
| Zinc oxide | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 |
| Vulcanization accelerator 2 | 1.5 | 1.5 | 1.2 | 1.5 | 1.0 | 1.0 | 1.5 | 1.0 |
| Rubber layer | | | | | | | | |
| tan δ A | 0.216 | 0.216 | 0.191 | 0.216 | 0.165 | 0.146 | 0.216 | 0.165 |
| tan δ (30°C) | 0.198 | 0.198 | 0.173 | 0.198 | 0.142 | 0.129 | 0.198 | 0.142 |
| Specific gravity | 1.215 | 1.215 | 1.185 | 1.215 | 1.173 | 1.171 | 1.215 | 1.173 |
| Total styrene content (% by mass) | 32 | 32 | 32 | 32 | 32 | 32 | 32 | 32 |
| Tire | | | | | | | | |
| Tire size | 275/35R19 | 275/35R19 | 275/35R19 | 205/55R18 | 205/55R18 | 205/55R18 | 205/55R18 | 275/35R19 |
| G (kq) | 10.0 | 9.5 | 9.6 | 9.1 | 9.1 | 9.0 | 8.1 | 9.0 |
| $W_L$ (kg) | 627 | 634 | 630 | 561 | 565 | 556 | 565 | 624 |
| $G/W_L$ | 0.0160 | 0.0149 | 0.0152 | 0.0162 | 0.0161 | 0.0161 | 0.0144 | 0.0145 |

(continued)

| Tire | | | | | | | | |
|---|---|---|---|---|---|---|---|---|
| Value of Mathematical expression (1) | 1306 | 1300 | 1310 | 1784 | 1780 | 1787 | 1780 | 1302 |
| S($mm^2$) | 3.1 | 3.1 | 3.1 | 3.1 | 3.1 | 3.1 | 3.1 | 3.1 |
| $S_{ce}$/Sr | 0.51 | 0.51 | 0.51 | 0.48 | 0.48 | 0.48 | 0.48 | 0.51 |
| La/Lb | 0.11 | 0.11 | 0.11 | 0.15 | 0.15 | 0.15 | 0.15 | 0.11 |
| Sg/St | 0.23 | 0.23 | 0.23 | 0.25 | 0.25 | 0.25 | 0.25 | 0.23 |
| Sg1/St | 0.09 | 0.09 | 0.09 | 0.12 | 0.12 | 0.12 | 0.12 | 0.09 |
| Sg2/St | 0.14 | 0.14 | 0.14 | 0.13 | 0.13 | 0.13 | 0.13 | 0.14 |
| Index | | | | | | | | |
| Fuel efficiency | 100 | 105 | 107 | 104 | 115 | 118 | 108 | 113 |
| Pinch cut resistance | 100 | 89 | 84 | 96 | 81 | 78 | 91 | 85 |

From results in Tables 1 to 4, it is evident that a tire of the disclosure, in which tire a tire weight with respect to the maximum load capability of the tire, the tire size, and tan δ of the rubber composition constituting the tread are made to be within a predetermined range, is improved in in fuel efficiency and pinch cut resistance in a well-balanced manner.

<Embodiment>

An example of embodiments of the disclosure is shown below:

[1] A tire comprising a tread, the tread comprising at least one rubber layer of a rubber composition comprising a rubber component, a filler, and a silane coupling agent, wherein a ratio ($G/W_L$) of a tire weight G (kg) with respect to a maximum load capability $W_L$ (kg) of the tire is 0.0150 or less (preferably 0.0145 or less, more preferably 0.0140 or less, further preferably 0.0135 or less, and particularly preferably 0.130 or less), and, where Wt (mm) is the tire cross-sectional width and Dt (mm) is the tire outer diameter, Wt and Dt satisfy the following Mathematical expression (1), and, wherein an average value of tan δ at 15°C to 30°C of the rubber composition, which average value is measured under a condition of a frequency of 10 Hz, an initial strain of 10%, and an amplitude of ±0.5%, is 0.20 or less (preferably 0.19 or less and more preferably 0.18 or less):

$$(\pi/4)\times(Dt^2/Wt)\geq1700 \cdots (1)$$

[2] The tire of [1] in the above, wherein a ratio (30°C tan δ/G) of tan δ at 30°C of the rubber composition with respect to the tire weight G (kg), which tan δ at 30°C is measured under a condition of a frequency of 10 Hz, an initial strain of 5%, and a dynamic strain of ±1.0%, is over 0.010 (preferably over 0.015, more preferably over 0.020, further preferably over 0.022, further preferably over 0.024, and particularly preferably over 0.026).

[3] The tire of [1] or [2] in the above, wherein tan δ at 30°C of the rubber composition, which tan δ at 30°C is measured under a condition of a frequency of 10 Hz, an initial strain of 5%, and a dynamic strain of ±1.0%, is 0.28 or less (preferably 0.25 or less, more preferably 0.22 or less, and further preferably 0.20 or less).

[4] The tire of any one of [1] to [3] in the above, wherein a specific gravity of the rubber composition is 1.270 or less (preferably 1.250 or less, more preferably 1.220 or less, and further preferably 1.200 or less).

[5] The tire of any one of [1] to [4] in the above, wherein a total styrene content in styrene-butadiene rubber and butadiene rubber comprised in the rubber component is 60% by mass or less (preferably 8 to 60% by mass, more preferably 12 to 50% by mass, and further preferably 16 to 40% by mass).

[6] The tire of any one of [1] to [5] in the above, wherein the silane coupling agent comprises a polysulfide compound, which polysulfide compound comprises an alkoxysilyl group and a sulfur atom, and, in which polysulfide compound, the number of carbon atoms intervening between a silicon atom constituting the alkoxysilyl group and the sulfur atom is six or more.

[7] The tire of any one of [1] to [6] in the above, wherein the tread part has a pair of shoulder land parts partitioned by two or more circumferential grooves extending continuously in the tire circumferential direction and a center land part located between the pair of shoulder land parts, and has at least one small hole in at least one land part, which small hole has an area of opening to a tread surface of 0.1 to 15 $mm^2$ (preferably 0.5 to 10 $mm^2$, more preferably 1.0 to 7.0 $mm^2$, and further preferably 1.5 to 5.0 $mm^2$).

[8] The tire of any one of [1] to [7] in the above, wherein, where Sr is a total land part area of the tread part and $S_{ce}$ is a total center land part area of the tread part, $S_{ce}/Sr$ is 0.35 to 0.80 (preferably 0.40 to 0.70, more preferably 0.42 to 0.60, and further preferably 0.44 to 0.55).

[9] The tire of any one of [1] to [8] in the above, wherein the tread part has at least two circumferential grooves extending continuously in the tire circumferential direction, and a width direction groove, and can optionally have a sipe, and, where La is a length of the tire in the circumferential direction and Lb is a total sum of a total Lb1 of width direction edge component lengths of width direction grooves and a total Lb2 of width direction edge component lengths of sipes, La/Lb is 0.10 to 0.30 (preferably 0.12 to 0.27, more preferably 0.13 to 0.25, and further preferably 0.14 to 0.23).

[10] The tire of [9] in the above, wherein, where St is a ground contact area of the tread part and Sg is a total sum of a total area Sg1 of the circumferential grooves and a total area Sg2 of the width direction grooves and the sipes of the tread part, Sg/St is 0.15 to 0.35 (preferably 0.18 to 0.33 and more preferably 0.21 to 0.31).

[11] The tire of [10] in the above, wherein Sg1/St is 0.09 to 0.16 (preferably 0.10 to 0.15 and more preferably 0.11 to 0.14) and Sg2/St is 0.08 to 0.14 (preferably 0.09 to 0.14 and more preferably 0.10 to 0.13).

REFERENCE SIGNS LIST

| | |
|---|---|
| 1 | Circumferential groove |
| 2 | Land part |
| 10 | Tread |
| 11 | Shoulder land part |
| 12 | Center land part |
| 21 | Lateral shoulder groove |
| 22 | Shoulder sipe |
| 23 | Center sipe |
| 24 | Small hole |

## Claims

**1.** A tire comprising a tread,

the tread comprising at least one rubber layer of a rubber composition comprising a rubber component, a filler, and a silane coupling agent,
wherein a ratio ($G/W_L$) of a tire weight G (kg) with respect to a maximum load capability $W_L$ (kg) of the tire is 0.0150 or less,
where Wt (mm) is the tire cross-sectional width and Dt (mm) is the tire outer diameter, Wt and Dt satisfy the following Mathematical expression (1), and,
wherein, an average value of tan δ at 15°C to 30°C of the rubber composition, which average value is measured under a condition of a frequency of 10 Hz, an initial strain of 10%, and an amplitude of ±0.5%, is 0.20 or less:

$$(\pi/4)\times(Dt^2/Wt)\geq 1700 \cdots (1)$$

**2.** The tire of claim 1, wherein a ratio (30°C tan δ/G) of tan δ at 30°C of the rubber composition with respect to the tire weight G (kg), which tan δ at 30°C is measured under a condition of a frequency of 10 Hz, an initial strain of 5%, and a dynamic strain of ±1.0%, is over 0.010.

**3.** The tire of claim 1 or 2, wherein tan δ at 30°C of the rubber composition, which tan δ at 30°C is measured under a condition of a frequency of 10 Hz, an initial strain of 5%, and a dynamic strain of ±1.0%, is 0.28 or less.

**4.** The tire of any one of claims 1 to 3, wherein a specific gravity of the rubber composition is 1.270 or less.

**5.** The tire of any one of claims 1 to 4, wherein a total styrene content in styrene-butadiene rubber and butadiene rubber comprised in the rubber component is 60% by mass or less.

**6.** The tire of any one of claims 1 to 5, wherein the silane coupling agent comprises a polysulfide compound, which polysulfide compound comprises an alkoxysilyl group and a sulfur atom, and, in which polysulfide compound, the number of carbon atoms intervening between a silicon atom constituting the alkoxysilyl group and the sulfur atom is six or more.

**7.** The tire of any one of claims 1 to 6,

wherein the tread part has a pair of shoulder land parts partitioned by two or more circumferential grooves extending continuously in the tire circumferential direction and a center land part located between the pair of shoulder land parts, and
has at least one small hole in at least one land part, which small hole has an area of opening to a tread surface of 0.1 to 15 $mm^2$.

**8.** The tire of any one of claims 1 to 7, wherein, where Sr is a total land part area of the tread part and $S_{ce}$ is a total center land part area of the tread part, $S_{ce}/Sr$ is 0.35 to 0.80.

**9.** The tire of any one of claims 1 to 8,

wherein the tread part has at least two circumferential grooves extending continuously in the tire circumferential direction, and a width direction groove, and can optionally have a sipe, and,
where La is a length of the tire in the circumferential direction and Lb is a total sum of a total Lb1 of width direction edge component lengths of width direction grooves and a total Lb2 of width direction edge component lengths of sipes, La/Lb is 0.10 to 0.30.

**10.** The tire of claim 9, wherein, where St is a ground contact area of the tread part and Sg is a total sum of a total area Sg1 of the circumferential grooves and a total area Sg2 of the width direction grooves and the sipes of the tread part, Sg/St is 0.15 to 0.35.

**11.** The tire of claim 10, wherein Sg1/St is 0.09 to 0.16 and Sg2/St is 0.08 to 0.14.

FIG. 1

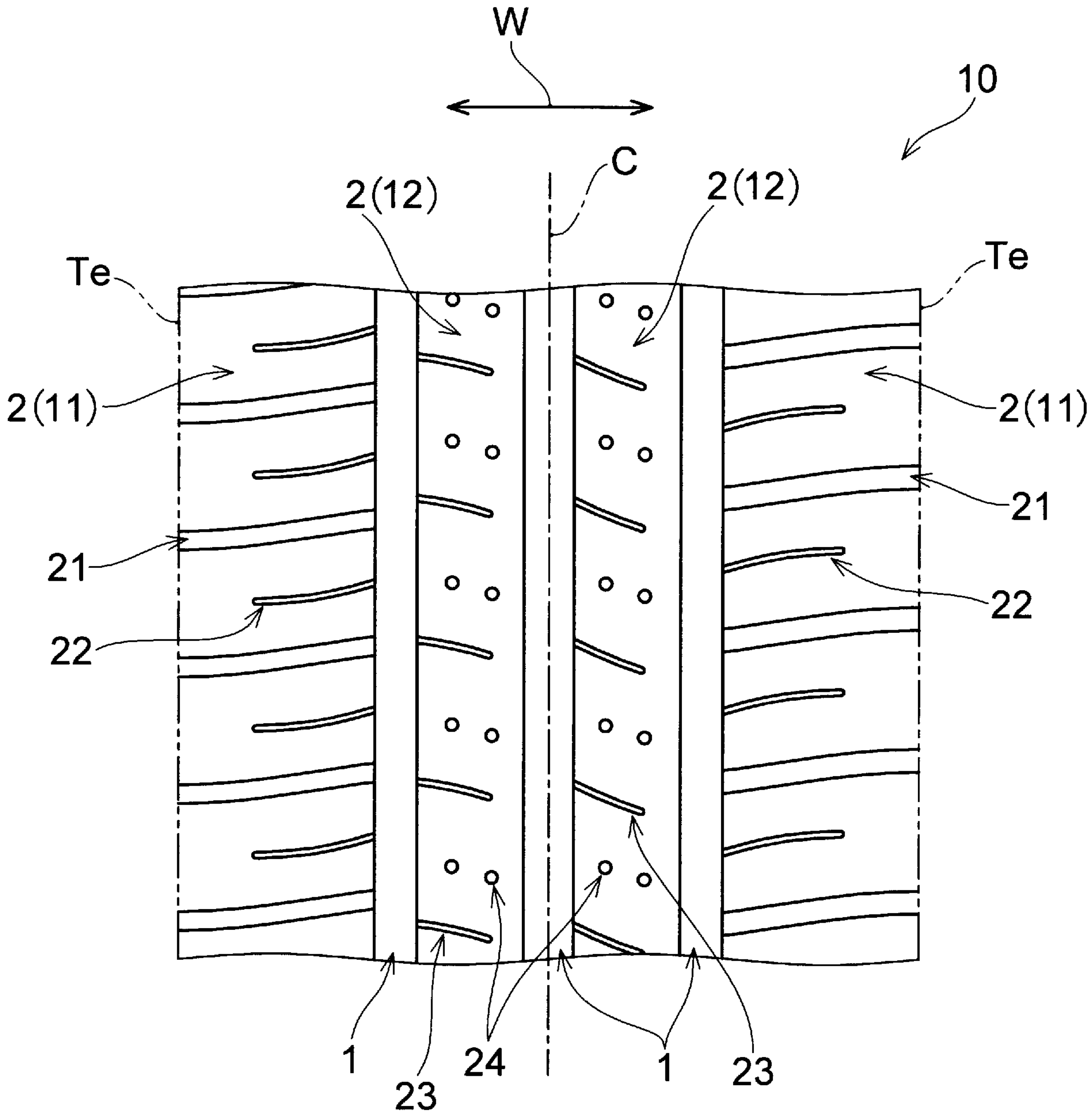

FIG. 2

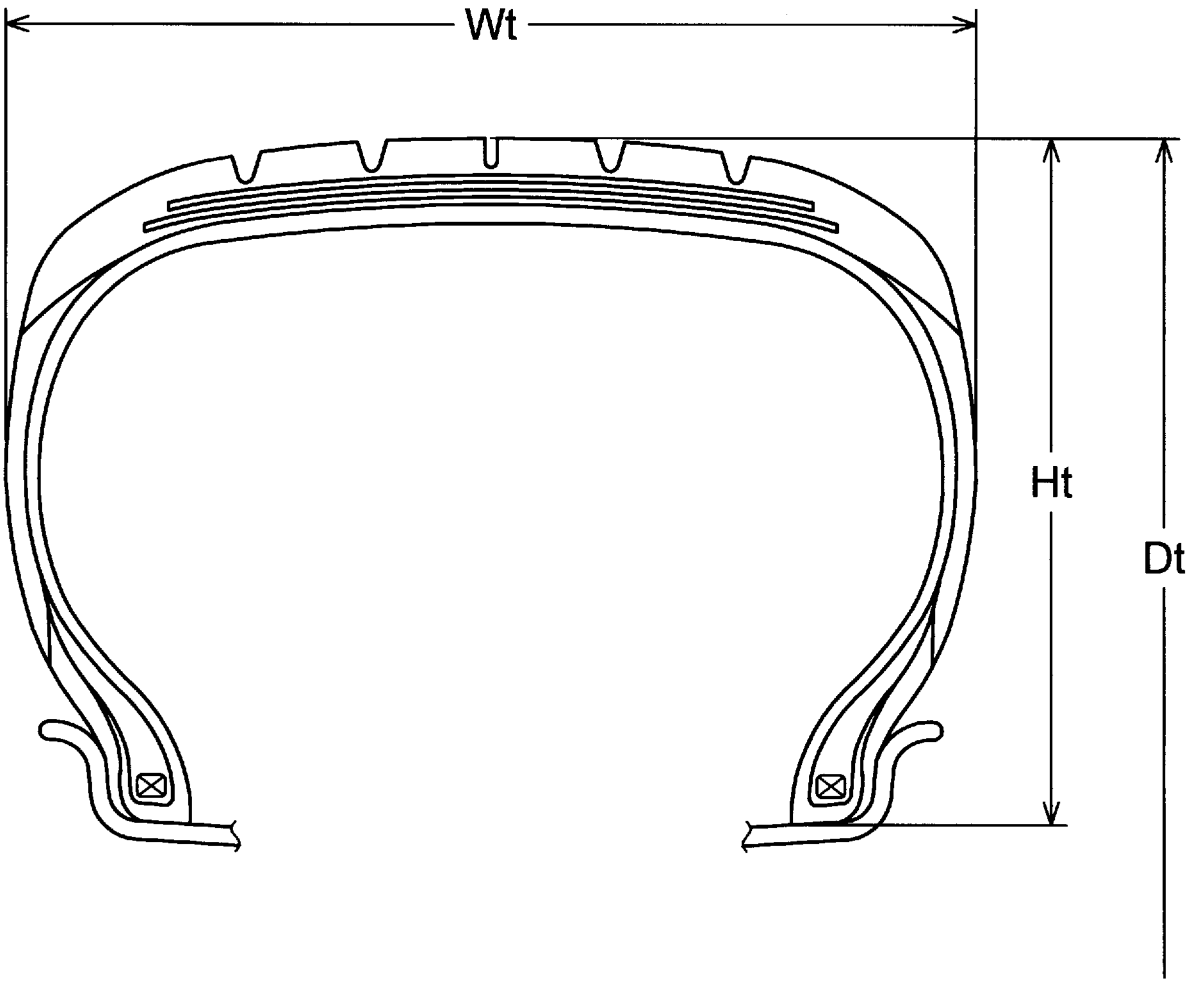

## INTERNATIONAL SEARCH REPORT

International application No.
**PCT/JP2021/029615**

### A. CLASSIFICATION OF SUBJECT MATTER

***B60C 11/00***(2006.01)i; ***B60C 1/00***(2006.01)i; ***B60C 3/04***(2006.01)i; ***B60C 11/03***(2006.01)i; ***C08K 3/013***(2018.01)i; ***C08K 5/548***(2006.01)i; ***C08L 21/00***(2006.01)i
FI: B60C11/00 D; B60C3/04 Z; B60C1/00 A; B60C11/00 H; B60C11/03 100B; B60C11/03 Z; C08L21/00; C08K3/013; C08K5/548

According to International Patent Classification (IPC) or to both national classification and IPC

### B. FIELDS SEARCHED

Minimum documentation searched (classification system followed by classification symbols)

B60C1/00-19/12; C08K3/013; C08K5/548; C08L21/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| P, A | JP 6863504 B1 (SUMITOMO RUBBER IND) 21 April 2021 (2021-04-21) entire text | 1-11 |
| P, A | JP 6863503 B1 (SUMITOMO RUBBER IND) 21 April 2021 (2021-04-21) entire text | 1-11 |
| E, A | JP 6919744 B1 (SUMITOMO RUBBER IND) 18 August 2021 (2021-08-18) entire text | 1-11 |
| A | JP 2020-158709 A (SUMITOMO RUBBER IND) 01 October 2020 (2020-10-01) entire text | 1-11 |
| A | JP 2018-123260 A (SUMITOMO RUBBER IND) 09 August 2018 (2018-08-09) entire text | 1-11 |
| A | WO 2018/143380 A1 (SUMITOMO RUBBER IND) 09 August 2018 (2018-08-09) entire text | 1-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 October 2021** | **19 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No. PCT/JP2021/029615

**C. DOCUMENTS CONSIDERED TO BE RELEVANT**

| Category* | Citation of document, with indication, where appropriate, of the relevant passages | Relevant to claim No. |
|---|---|---|
| A | JP 2019-194282 A (YOKOHAMA RUBBER CO LTD) 07 November 2019 (2019-11-07) entire text | 1-11 |
| A | EP 2108527 A1 (THE GOODYEAR TIRE & RUBBER COMPANY) 14 October 2009 (2009-10-14) entire text | 1-11 |

Form PCT/ISA/210 (second sheet) (January 2015)

**INTERNATIONAL SEARCH REPORT**
**Information on patent family members**

International application No.
**PCT/JP2021/029615**

| Patent document cited in search report | | | Publication date (day/month/year) | Patent family member(s) | | | Publication date (day/month/year) |
|---|---|---|---|---|---|---|---|
| JP | 6863504 | B1 | 21 April 2021 | (Family: none) | | | |
| JP | 6863503 | B1 | 21 April 2021 | (Family: none) | | | |
| JP | 6919744 | B1 | 18 August 2021 | (Family: none) | | | |
| JP | 2020-158709 | A | 01 October 2020 | (Family: none) | | | |
| JP | 2018-123260 | A | 09 August 2018 | (Family: none) | | | |
| WO | 2018/143380 | A1 | 09 August 2018 | US | 2019/0390042 | A1 | |
| | | | | EP | 3567077 | A1 | |
| | | | | CN | 110198978 | A | |
| JP | 2019-194282 | A | 07 November 2019 | (Family: none) | | | |
| EP | 2108527 | A1 | 14 October 2009 | US | 2009/0255613 | A1 | |
| | | | | BR | PI0900984 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019202578 A
- JP 2018065954 A